# EUROPÄISCHE PATENTSCHRIFT

(11) **EP 0 763 444 B1**
(45) Veröffentlichungstag und Bekanntmachung des Hinweises auf die Patenterteilung: **11.04.2001**
(21) Anmeldenummer: 96112116.7
(22) Anmeldetag: 26.07.1996
(51) Int. Cl.: B60N 2/36

(54) **Rücksitzanlage für ein Kraftfahrzeug, insbesondere Personenkraftwagen**
Rear seat for automotive vehicles, particularly for passenger cars
Siège arrière pour véhicules automobiles, en particulier pour voitures

(30) Priorität: 02.09.1995 DE 19532530
(43) Veröffentlichungstag der Anmeldung: 19.03.1997
(73) Patentinhaber: Dr.Ing.h.c. F. Porsche Aktiengesellschaft, 70435 Stuttgart (DE)
(72) Erfinder: Luik, Klaus, 75417 Mühlacker (DE); Späth, Wolfgang, 71272 Renningen (DE); Hinrichs, Kurt, 71287 Weissach (DE)

(56) Entgegenhaltungen:
- DE-A- 2 930 549
- US-A- 4 323 278
- US-A- 4 561 694
- PATENT ABSTRACTS OF JAPAN vol. 018, no. 136 (M-1572), 7.März 1994 & JP 05 319208 A (SUZUKI MOTOR CORP), 3.Dezember 1993,

## Beschreibung

Die Erfindung bezieht sich auf eine Rücksitzanlage für ein Kraftfahrzeug, insbesondere Personenkraftwagen gemäß dem Oberbegriff des Patentanspruches 1.

Aus der DE 29 30 549 A ist eine Rücksitzanlage für ein Kraftfahrzeug bekannt, die zumindest eine nach vorne klappbare Rücklehne umfaßt, wobei an einem oberen, seitlich außenliegenden Bereich der Rückenlehne ein die Lehnenverriegelung lösendes Betätigungsteil vorgesehen ist. Für die Insassen der Rücksitzanlage ist jedem Sitz ein Dreipunktsicherheitsgurt zugeordnet, wobei im abgelegten Zustand das Gurtband nahe der Fahrzeugseitenwand von einem unteren Verankerungspunkt zu einem oberen Gurtumlenkelement bzw. einem Gurtaufroller verläuft und dabei im Schwenkbereich der Rückenlehne verläuft. Bei derartigen Anordnungen hat sich herausgestellt, daß insbesondere beim Hochklappen der Rückenlehne von der horizontalen Ablagestellung in die aufrechte Betriebsstellung ein Festklemmen des Gurtbandes zwischen der Außenseite der Rückenlehne und der angrenzenden Fahrzeugseitenwand erfolgt. Zur Beseitigung dieses Misstandes ist es aus der DE 29 30 549 A bekannt, an der Rückseite der Rücklehne nahe deren Oberkante eine an die Seitenkante in etwa anschließende, nach hinten und zur Fahrzeugmitte zu verlaufende Abweisvorrichtung anzuordnen. Durch diese wird beim Hochklappen der Rückenlehne das Gurtband nach der Fahrzeugseitenwand hin abgelenkt, so daß die Seitenkante der Rückenlehne sich dann am Gurtband nach hinten vorbei bewegt, ohne das Gurtband mitzunehmen. Zur Vermeidung des Festklemmens des Gurtbandes ist also ein separates Bauteil erforderlich, das an der Rückseite des Sitzes befestigt werden muß. Desweiteren ist aus der JP 05 319 208 A eine Führung für ein Gurtband eines Sicherheitsgurtes auf einer Lehne einer Rücksitzanlage bekannt, bei der das Gurtband zwischen einem Hebelteil eines Betätigungsgriffes und einer Fläche der Rückenlehne gehalten wird.

Aufgabe der Erfindung ist es, an einer Rücksitzanlage eines Kraftfahrzeuges solche Vorkehrungen zu treffen, daß bei verringertem Aufwand ein Festklemmen des Gurtbandes insbesondere beim Hochklappen der Rücklehne vermieden wird. Erfindungsgemäß wird diese Aufgabe durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch die Heranziehung des zur Lösung der Lehnenverriegelung dienenden Betätigungsteils als Gurtbandführung eine ein Festklemmen des Gurtbandes beim Hochklappen der Rückenlehne verhindernde Vorrichtung geschaffen wird, die einen einfachen Aufbau aufweist und kostengünstig herstellbar ist. Auf die Fertigung und Montage eines separaten Teiles kann somit verzichtet werden. Das Gurtband liegt vorzugsweise über seine gesamte Breite an der Oberseite eines Griffabschnittes des Betätigungsteils auf. Der Griffabschnitt weist an seiner Oberseite einen Führungsabschnitt für das Gurtband auf, wobei der Führungsabschnitt in Richtung Fahrzeugseitenwand nach oben hin ansteigt und so einem seitlichen Verrutschen des Gurtbandes nach außen hin entgegenwirkt. Der Führungsabschnitt weist - in der Vorderansicht gesehen - einen bogenförmigen Verlauf auf. Zur zusätzlichen Sicherung gegen seitliches Verrutschen des Gurtbandes ist am Führungsabschnitt örtlich eine nach innen gerichtete nasenförmige oder bügelförmige Erhebung ausgebildet. Durch die Ausbildung des Griffabschnittes ist das abgelegte Gurtband in sämtlichen Stellungen der Rückenlehne geführt und kann nicht eingeklemmt werden.

Ein Ausführungsbeispiel der Erfindung ist in der Zeichnung dargestellt und wird im folgenden näher beschrieben.

Es zeigt
- Fig. 1: eine perspektivische Ansicht einer Seite einer Rücksitzanlage für einen Personenkraftwagen mit einem Dreipunktsicherheitsgurt im abgelegten Zustand, wobei die Rückenlehne ihre aufrechte Betriebsstellung einnimmt,
- Fig. 2: eine weitere perspektivische Ansicht einer Seite der Rücksitzanlage mit dem Dreipunktsicherheitsgurt im abgelegten Zustand, wobei die Rückenlehne in ihre abgeklappte etwa horizontale Ablagestellung verlagert ist,

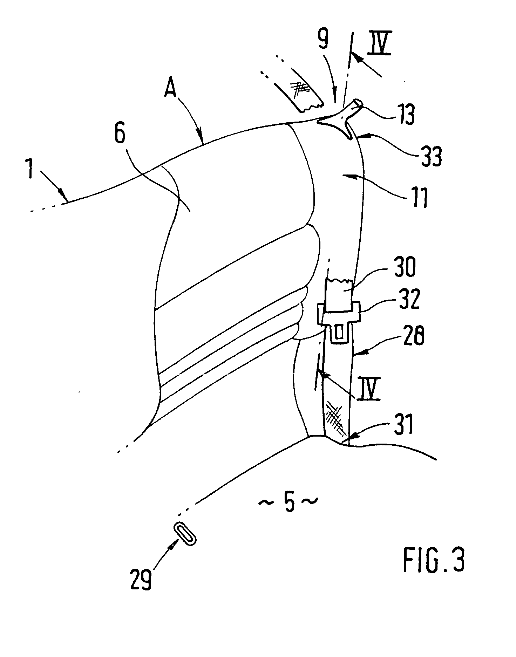

- Fig. 3: eine Ansicht ähnlich Fig. 1 auf das erfindungsgemäße Betätigungsteil der Rückenlehne,
- Fig. 4: einen Schnitt nach der Linie IV-IV der Fig. 3 in größerem Maßstab,
- Fig. 5: einen Schnitt nach der Linie V-V der Fig. 4 in größerem Maßstab.

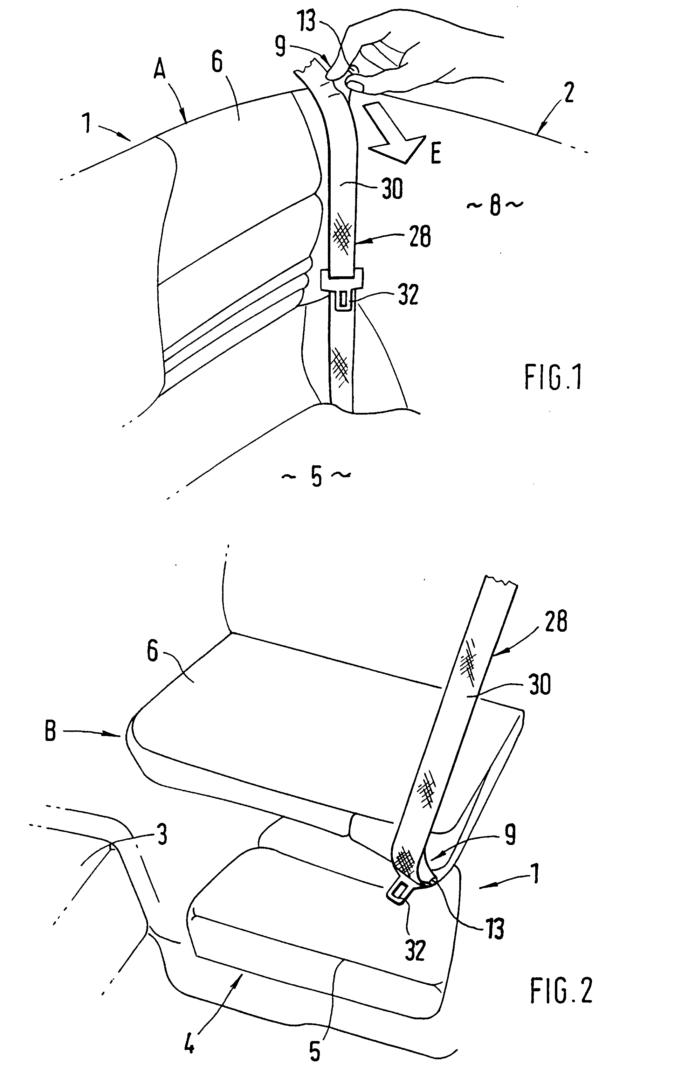

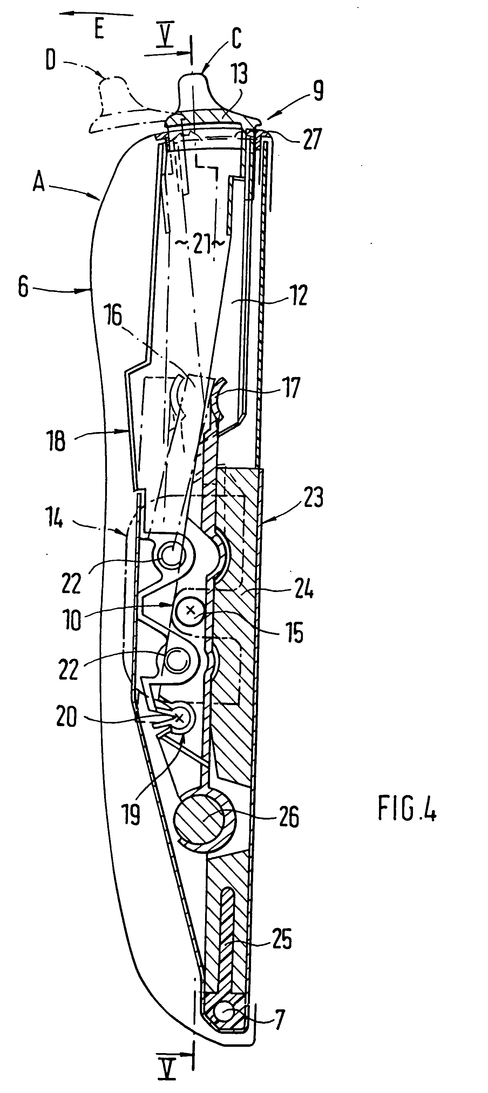

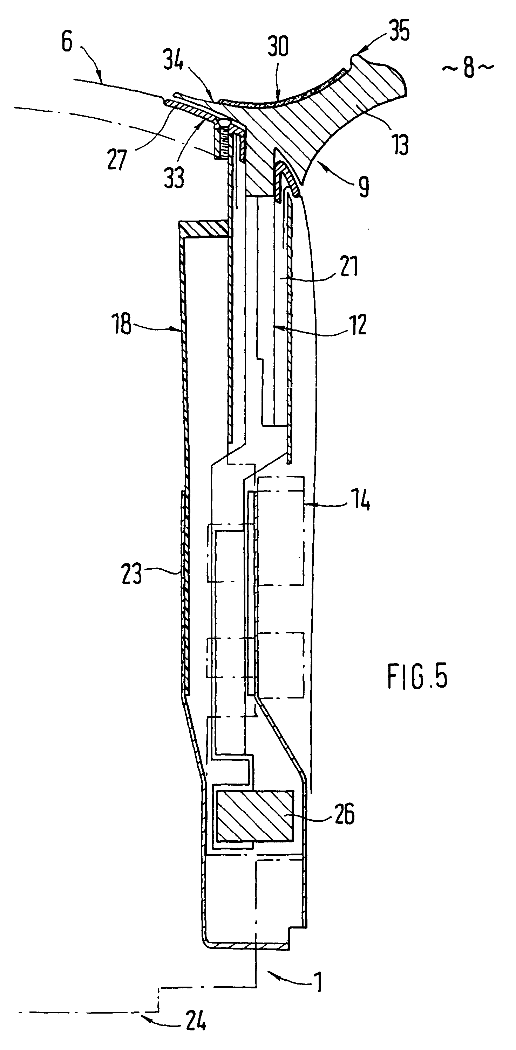

Eine Rücksitzanlage 1 für ein durch einen Personenkraftwagen 2 gebildetes Fahrzeug umfaßt beiderseits eines längsverlaufenden Mitteltunnels 3 jeweils ein in eine Sitzmulde 4 eingelegtes Sitzkissen 5 und eine zugeordnete schwenkbare Rückenlehne 6. Die Rückenlehne 6 ist an ihrem unteren Rand um eine querverlaufende, horizontale Achse 7 schwenkbar gelagert, um welche sie von einer aufrechten Betriebsstellung A in eine etwa horizontale Ablagestellung B geschwenkt werden kann und umgekehrt. In der in Fig. 1 dargestellten hochgeschwenkten bzw. hochgeklappten Betriebsstellung A ist die Rückenlehne 6 mit der angrenzenden Fahrzeugseitenwand 8 verriegelt. Ein Betätigungsteil 9 zum Lösen der Lehnenverriegelung 10 ist in einem seitlich außenliegenden Bereich 11 der Rückenlehne 6 angeordnet. Das Betätigungsteil 9 setzt sich aus einem langgestreckten schwenkbaren Betätigungshebel 12 und einem mit diesem verbundenen Griffabschnitt 13 zusammen. Der Griffabschnitt 13 ist auf das obere Ende des Betätigungshebels 12 aufgesteckt. Die Lehnenverriegelung 10 umfaßt ein an der Rückenlehne 6 befestigtes Schloß 14, das mit einem aufbauseitig angeordneten, sich in Fahrzeugquerrichtung erstreckenden Verriegelungsbolzen 15 in Wirkverbindung steht. Ein nach oben hin vorragender Auslösehebel 16 des Schlosses 14 wirkt mit den langgestreckten Betätigungshebel 12 zusammen, dergestalt, daß ein bogenförmiger Abschnitt 17 des Betätigungshebels 12 seitlich gegen einen oberen Endbereich des Auslösehebels 16 drückt (Fig. 4 und 5).

Der langgestreckte Betätigungshebel 12 ist unterhalb des als Drehfallenschloß ausgebildeten Schlosses 14 drehbar an einen oberen Abdeckteil 18 aus Kunststoff gelagert. Hierzu ist eine hinterschnittene Aufnahme 19 des Betätigungshebels 12 auf eine zylindrische Anformung 20 des Abdeckteiles 18 aufgeklipst.
In einem oberen Bereich weist das Abdeckteil 18 einen innenliegenden - im Querschnitt gesehen - etwa rechteckförmigen Hohlraum 21 auf, durch den ein Teilbereich des abgekröpften Betätigungshebels 12 hindurchgeführt ist. Das Abdeckteil 18 weist oberhalb der Anlenkung des Betätigungshebels 12 zwei eingesetzte übereinanderliegende Gewindehülsen 22 auf, die die nicht näher dargestellten Befestigungsschrauben für das von außen aufgesetzte Schloß 14 aufnehmen.
Das Abdeckteil 18 ist mit seinem unteren Endbereich in ein aus Blech bestehendes Gehäuseteil 23 eingesetzt, wobei das Gehäuseteil 23 mit einer Rückwand 24 der Rückenlehne 6 fest verbunden ist (z.B. durch Nieten). Das Gehäuseteil 23 nimmt ferner ein unteres Lagerteil 25 aus Kunststoff zur schwenkbaren Lagerung der Rückenlehne 6 auf.
Gemäß Fig. 4 überragt der Betätigungshebel 12 das Abdeckteil 18 nach unten hin und ist an seinem freien Ende B mit einem eingesetzten Masseteil 26 versehen.
Zwischen dem Abdeckteil 18 und der Unterseite des Griffabschnittes 13 ist eine Rosette 27 vorgesehen, die am Abdeckteil 18 befestigt ist (z.B. durch Schrauben).

Zum Lösen der Lehnenverriegelung 10 wird das Betätigungsteil 9 in Fahrzeuglängsrichtung von einer Verriegelungsstellung C in eine Entriegelungsstellung D verschwenkt und zwar in Fahrtrichtung E. Im Ausführungsbeispiel umfaßt die Rücksitzanlage 1 zwei nebeneinander liegende Sitze mit getrennten Rückenlehnen 6, wobei jedem Sitz ein separater Dreipunktgurt 28 zugeordnet ist.

Jeder Dreipunktgurt 28 besteht aus einem benachbart dem Mitteltunnel 3 angeordneten Gurtschloß 29, sowie einem den Becken- und Schultergurt bildenden Gurtband 30. Das Gurtband 30 ist bei 31 am Fahrzeugboden oder an der Fahrzeugseitenwand 8 verankert, von wo es nach oben zu einem oberen, nicht näher dargestellten Gurtumlenkelement verläuft.

Nach dem Gurtumlenkelement mündet das Gurtband 30 in den ebenfalls nicht näher dargestellten Gurtaufroller. Am Gurtband 30 befindet sich die Schloßzunge 32, die mit dem Gurtschloß 29 verbindbar ist. Das Gurtband 30 verläuft bei abgelegtem Dreipunktsicherheitsgurt 28 nahe der Fahrzeugseitenwand 8. Um insbesondere beim Hochklappen der Rückenlehne 6 von der Ablagestellung B in die Betriebsstellung A ein Einklemmen des abgelegten Gurtbandes 30 zwischen der Rückenlehne 6 und der angrenzenden Fahrzeugseitenwand 8 zu vermeiden, ist erfindungsgemäß vorgesehen, daß das Betätigungsteil 9 zugleich als Führungselement für das angrenzende Gurtband 30 des abgelegten Dreipunktsicherheitsgurtes 28 herangezogen wird.

Zu diesem Zweck weist der sich in einem obenliegenden, bogenförmigen Übergangsbereich 33 der Rückenlehne 6 erstreckende Griffabschnitt 13 des Betätigungsteils 9 an seiner Oberseite einen Führungsabschnitt 34 auf (Fig. 5). Der Führungsabschnitt 34 steigt in Richtung Fahrzeugseitenwand 8 nach oben hin an, wodurch einem Verrutschen des abgelegten Gurtbandes 30 nach außen hin entgegengewirkt ist. In der Vorderansicht gesehen weist der Führungsabschnitt 34 einen bogenförmigen Verlauf auf (Fig. 5).

Der sich in Fahrzeugquerrichtung erstreckende Griffabschnitt 13 weist eine solche Breite auf, daß zumindest ein wesentlicher Teil der Breite des Gurtbandes 30 an der Oberseite des Griffabschnittes 13 aufliegt. Vorzugsweise ist der Griffabschnitt 13 etwas breiter als das Gurtband 30 ausgebildet, so daß dieses mit seiner gesamten Breite am Griffabschnitt 13 aufliegt. Zusätzlich kann am Führungsabschnitt 34 und zwar an dem der Fahrzeugseitenwand 8 zugekehrten Ende eine nach oben gerichtete nasenförmige oder bügelförmige Erhebung 35 vorgesehen sein, die verhindert, daß sich das Gurtband 30 über den Griffabschnitt 13 hinweg nach außen bewegen kann. Durch die Doppelfunktion des Betätigungsteils 9 wird der Aufbau der Rücksitzanlage 1 wesentlich vereinfacht und der abgelegte Dreipunktsicherheitsgurt 28 ist in allen Stellungen der Rückenlehne 6 in Querrichtung geführt.

## Patentansprüche

1. Rücksitzanlage (1) für ein Kraftfahrzeug, insbesondere Personenkraftwagen, die zumindest eine von einer aufrechten Betriebsstellung (A) in eine etwa horizontale Ablagestellung (B) klappbare Rückenlehne (6) mit einem die Lehnenverriegelung (10) lösenden Betätigungsteil (9) umfaßt, das in einem seitlich außenliegenden Bereich (11) der Rückenlehne (6) angeordnet ist, die für die Insassen der Rücksitzanlage (1) Dreipunktsicherheitsgurte (28) aufweist, wobei das Gurtband (30) im abgelegten Zustand nahe der Fahrzeugseitenwand (8) von einem unteren Verankerungspunkt zu einem oberen Gurtumlenkelement bzw. einem Gurtaufroller verläuft und dabei im Schwenkbereich der Rückenlehne liegt, dadurch gekennzeichnet, daß das Betätigungsteil (9) als Führungselement für das angrenzende Gurtband (30) des abgelegten Dreipunktsicherheitsgurtes (28) dient und der Griffabschnitt (13) in Querrichtung eine solche Erstreckung aufweist, daß zumindest ein wesentlicher Teil der Breite des Gurtbandes (30) an der Oberseite des Griffabschnittes (13) aufliegt und dieser an seiner Oberseite einen Führungsabschnitt (34) besitzt, der in Richtung Fahrzeugseitenwand (8) nach oben hin ansteigt und einem seitlichen Verrutschen des abgelegten Gurtbandes (20) nach außen hin entgegenwirkt.

2. Rücksitzanlage nach Anspruch 1, dadurch gekennzeichnet, daß das Betätigungsteil (9) aus einem im wesentlich innerhalb der Rückenlehne (6) verlaufenden schwenkbaren Betätigungshebel (12) und einem mit diesem verbundenen Griffabschnitt (13) zusammensetzt, wobei der Griffabschnitt (13) auf das freie Ende des Betätigungshebels (12) aufgesetzt ist und sich außerhalb der Rückenlehne (6) erstreckt, und daß der Griffabschnitt (13) zugleich als Führungselement für das angrenzende Gurtband (30) ausgebildet ist.

3. Rücksitzanlage nach Anspruch 2, dadurch gekennzeichnet, daß der Betätigungshebel (12) unterhalb eines Schlosses (14) der Lehnenverriegelung (10) an einem oberen Abdeckteil (18) drehbar angelenkt ist und daß ein oberer Abschnitt des abgekröpften Betätigungshebel (12) durch einen Hohlraum (21) des Abdeckteiles (18) hindurchgeführt ist, wobei der Betätigungshebel (21) über einen bogenförmigen Abschnitt (17) oberhalb des Schlosses (14) mit einem Auslösehebel (16) des Schlosses (14) zusammenwirkt.

4. Rücksitzanlage nach den Ansprüchen 1 und 2, dadurch gekennzeichnet, daß sich der außenliegende Griffabschnitt (13) entlang eines obenliegenden, bogenförmigen Übergangsbereiches (33) der Rückenlehne (6) erstreckt.

5. Rücksitzanlage nach Anspruch 1, dadurch gekennzeichnet, daß der Führungsabschnitt (34) - in der Vorderansicht gesehen - einen bogenförmigen Verlauf aufweist.

6. Rücksitzanlage nach Anspruch 1, dadurch gekennzeichnet, daß der Führungsabschnitt (34) an seinem der Fahrzeugseitenwand (8) zugekehrten Ende eine nach oben gerichtete Erhebung (35) aufweist.

7. Rücksitzanlage nach einem oder mehreren der vorangegangenen Ansprüche, dadurch gekennzeichnet, daß das Betätigungsteil (9) zum Lösen der Lehnenverriegelung (10) in Fahrzeuglängsrichtung - und zwar in Fahrtrichtung E - verschwenkt wird.

## Claims

1. A rear seat unit (1) for a motor vehicle, in particular a passenger car, which comprises at least one back rest (6) - foldable from an upright operating position (**A**) into a substantially horizontal folded-down position (**B**) - with an actuating part (9) which releases the back-rest locking (10) and which is arranged in an area (11) of the back rest (6) situated laterally on the outside and having three-point seat belts (28) for the occupants of the rear seat unit (1), wherein the belt strap (30) in the folded-down position extends close to the side panel (8) of the vehicle from a lower anchoring point to an upper belt-deflexion member or a belt retractor and during this is in the pivoting region of the back rest, **characterized in that** the actuating part (9) acts as a guide member for the adjacent belt strap (30) of the folded-down three-point seat belt (28), and the gripping portion (13) is extended in such a way in the transverse direction that at least a substantial portion of the width of the belt strap (30) rests on the top of the gripping portion (13), and the top thereof has a guide portion (34) ascending in the direction of the side panel (8) of the vehicle and counteracting a lateral slipping of the folded-down belt strap (30) towards the outside.

2. A rear seat unit according to Claim 1, **characterized in that** the actuating part (9) is formed by a pivotable actuating lever (12) extending substantially inside the back rest (6) and a gripping portion (13) connected thereto, wherein the gripping portion (13) is set on the free end of the actuating lever (12) and extends outside the back rest (6), and the gripping portion (13) is formed at the same time as a guide member for the adjacent belt strap (30).

3. A rear seat unit according to Claim 2, **characterized in that** the actuating lever (12) is articulated in a rotatable manner to an upper cover part (18) below a buckle (14) of the back-rest locking (10), and an upper portion of the actuating lever (12) bent at an angle passes through a cavity (21) in the cover part (18), wherein the actuating lever (12) cooperates with a releasing lever (16) of the buckle (14) by way of an arcuate portion (17) above the buckle (14).

4. A rear seat unit according to Claims 1 and 2, **characterized in that** the gripping portion (13) situated on the outside extends along an upper arcuate transition region (33) of the back rest (6).

5. A rear seat unit according to Claim 1. **characterized in that** the guide portion (34) has an arcuate shape as viewed from the front.

6. A rear seat unit according to Claim 1, **characterized in that** the guide portion (34) has an upwardly directed raised portion (35) at its end facing the side panel (8) of the vehicle.

7. A rear seat unit according to one or more of the preceding Claims. **characterized in that** the actuating part (9) for releasing the back-rest locking (10) is pivoted in the longitudinal direction of the vehicle, namely in the direction of travel **E**.

## Revendications

1. Système de sièges arrière (1) pour un véhicule automobile, notamment une voiture de tourisme, qui comprend au moins un dossier (6) rabattable dans une position de rangement (B) à peu près horizontale, depuis une position d'utilisation (A) verticale, avec un élément d'actionnement (9) qui supprime le verrouillage (10) du dossier et qui est disposé dans une zone (11) située latéralement à l'extérieur du dossier (6), lequel comporte des ceintures de sécurité (28) à trois points pour les passagers du système de sièges arrière (1), la sangle (30) s'étendant à l'état rangé à proximité de la paroi arrière (8) du véhicule, depuis un point d'ancrage inférieur vers un élément de renvoi supérieur de la sangle ou un enrouleur de sangle, et se situant ainsi dans la zone de pivotement du dossier, caractérisé en ce que l'élément d'actionnement (9) sert d'élément de guidage pour la sangle (30) adjacente de la ceinture de sécurité (28) à trois points rangée et le segment de prise (13) présente dans la direction transversale une étendue telle qu'au moins une partie essentielle de la largeur de la sangle (30) repose sur la face supérieure du segment de prise (13), et ce dernier présente sur sa face supérieure un segment de guidage (34) qui monte en direction de la paroi latérale (8) du véhicule et qui s'oppose à un glissement latéral vers l'extérieur de la sangle (30) rangée.

2. Système de sièges arrière selon la revendication 1, caractérisé en ce que l'élément d'actionnement (9) se compose d'un levier d'actionnement (12) pivotant, qui s'étend sensiblement à l'intérieur du dossier (6), ainsi que d'un segment de prise (13) relié à ce dernier, le segment de prise (13) étant placé sur l'extrémité libre du levier d'actionnement (12) et s'étendant à l'extérieur du dossier (6), et en ce que le segment de prise (13) est confirmé en même temps en élément de guidage pour la sangle (3à) adjacente.

3. Système de sièges arrière selon la revendication 2, caractérisé en ce que le levier d'actionnement (12) est articulé au-dessous d'un fermoir (14) du verrouillage (10) du dossier, de manière à pouvoir tourner sur un élément de couverture (18) supérieur et en ce qu'un segment supérieur du levier d'actionnement (12) coudé est guidé à travers une cavité (21) de l'élément de couverture (18), le levier d'actionnement (12) coopérant, par un segment en arc (17) au-dessus du fermoir (14), avec un levier de déclenchement (16) du fermoir (14).

4. Système de sièges arrière selon les revendications 1 et 2, caractérisé en ce que le segment de prise (13) situé à l'extérieur s'étend le long d'une zone de transition (33) en arc, située à la partie supérieure, du dossier (6).

5. Système de sièges arrière selon la revendication 1, caractérisé en ce que le segment de guidage (34) présente un parcours en arc, vu de face.

6. Système de sièges arrière, selon la revendication 1, caractérisé en ce que le segment de guidage (34) présente, à son extrémité tournée vers la paroi latérale (8) du véhicule, un relief (35) dirigé vers le haut.

7. Système de sièges arrière selon une ou plusieurs des revendications précédentes, caractérisé en ce que l'élément d'actionnement (9) est pivoté pour supprimer le verrouillage (10) du dossier dans la direction longitudinale du véhicule, c'est-à-dire dans la sens de marche E.
